# EUROPEAN PATENT SPECIFICATION

(11) **EP 1 326 041 B1**
(45) Date of publication and mention of the grant of the patent: **25.05.2005**
(21) Application number: 02007251.8
(22) Date of filing: 28.03.2002
(51) Int. Cl.: F16K 47/04, F16K 47/08

(54) **Steam pressure reducing and conditioning valve**
Dampfdruckreduzier- und aufbereitungsventil
Soupape de réduction et de conditionnement de vapeur

(30) Priority: 04.01.2002 US 39345
(43) Date of publication of application: 09.07.2003
(73) Proprietor: Dresser, Inc., Addison, TX 75001 (US)
(72) Inventor: Higuchi, Hiroyuki, Kashiwazaki-shi, Niigata-ken 945-0066 (JP)
(74) Representative: UEXKÜLL & STOLBERG

(56) References cited:
- WO-A-97/03313
- GB-A- 2 019 532
- US-A- 4 397 331

## Description

### TECHNICAL FIELD OF THE INVENTION

The present invention concerns a steam pressure reducing and conditioning valve.

### RELATED APPLICATION

The present invention includes common subject matter disclosed in U.S. Application Serial No. 10/038,985, entitled Steam Pressure Reducing and Conditioning Valve by the same inventor Hiroyuki Higuchi filed concurrently on January 4, 2003, under attorney docket number 52643-00351USPT.

### BACKGROUND OF THE INVENTION

Fig. 3 illustrates a first embodiment steam pressure reducing and conditioning valve (hereinafter "conditioning valve") 130 wherein hot and high pressure steam S inflowing from a first port 131 is desuperheated and depressurized by passing through a pressure reducing section 132 having scattered small holes 132a, and transformed into a rapid annular flow steam S1. The steam S1 is discharged from a second port 133 as desuperheated and depressurized steam S2 by supplying the rapid annular flow vapor S1 with subcooled water mist W in a body 136.

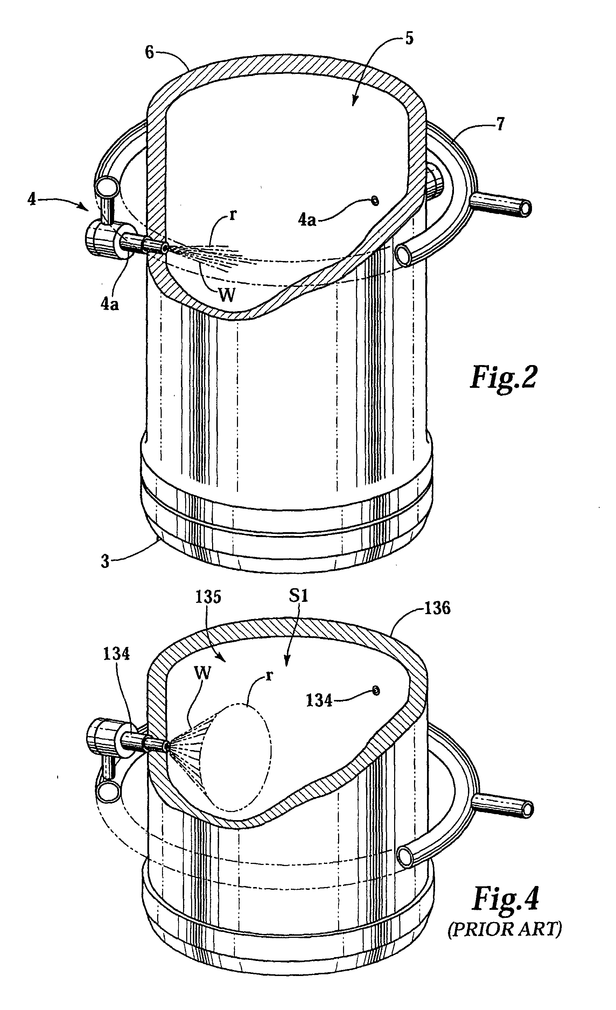

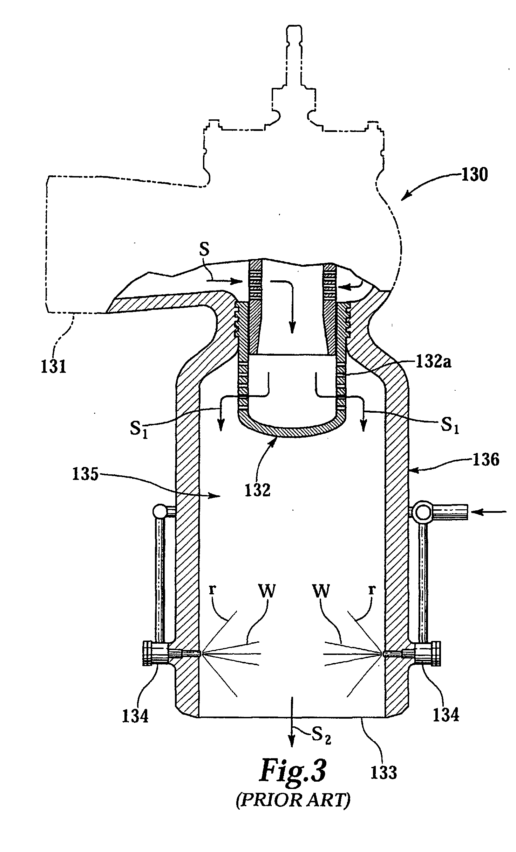

As shown in Fig. 4, the subcooled water mist W is injected from a nozzle 134, into a moisture jet section 135, and the jet pattern of this subcooled water mist W is conical. The subcooled water mist W injected from nozzle 134 collides with the steam S1, to cool down the steam S1.

Referring again to Fig. 3, when the subcooled water mist W injected from the nozzle 134 comes into contact with the pressure reducing section 132 in a hot state, the pressure reducing section 132 may crack and break due to an extreme temperature change. To prevent the cracking, the subcooled water mist W from the nozzle 134 should not come into contact with the pressure reducing section 132.

Consequently, in the prior art, the nozzle 134 is disposed remote from the pressure reducing section 132 so that the subcooled water mist W injected from the nozzle 134 will not come into contact with the pressure reducing section 132, thereby increasing the size of the body 136 and necessarily resulting in enlargement of the whole valve.

The superheated steam S is cooled by colliding the rapid annular flowing steam S1 with the subcooled water mist W, and further dispersing the droplets (mist) of subcooled water W.

However, when the nozzle 134 is disposed remote from the pressure reducing section 132 for the aforementioned reason, it is difficult to disperse (subdivide) the subcooled water as the velocity of the annular flowing steam decreases with the distance from the pressure reducing section 132.

### BRIEF DESCRIPTION OF THE DRAWINGS

The disclosed invention will be described with reference to the accompanying drawings, which show important sample embodiments of the invention and which are incorporated in the specification hereof by reference. A more complete understanding of the present invention may be had by reference to the following Detailed Description when taken in conjunction with the accompanying drawings, wherein:
Fig. 1 is a side view of a conditioning valve of the present invention having a portion of the valve cut away to illustrate a partial cross-section view;
Fig. 2 is a perspective view from above illustrating a lower portion of the valve body of the conditioning valve of Figure 1;
Fig. 3 is a side view of a prior art conditioning valve having a portion of the valve cut away to illustrate a partial cross-section view; and
Fig. 4 is a perspective view from above illustrating a lower portion of the prior art valve of Figure 3.

### DESCRIPTION OF SYMBOLS

- L: Distance
- r: Jet pattern
- S: Vapor
- W: Subcooled water mist ("moisture")

### SUMMARY OF THE INVENTION

The present invention comprises a conditioning valve 20 for passing a superheated steam S inflowing from a first port 1 through a pressure reducing section 2, and supplying subcooled water mist W and discharging depressurized and desuperheated steam S2 from a second port 3. One or more nozzles 4 for subcooled water W are provided in proximity to said pressure reducing section 2. A flat nozzle 4a injects subcooled water mist W in a planar pattern r. Nozzle 4 is configured so that there is a predetermined distance L between the jet pattern r of moisture W injected from flat nozzle 4a and the pressure reducing section 2.

In one embodiment, vapor change valve 20 includes a pressure reducing section 2 with a bottom and a cylindrical shape. The subcooled water mist W jet pattern r is selected to be substantially parallel to the bottom of the pressure reducing section 2.

It will be understood by those skilled in the art that one or more of nozzles 4 for injecting moisture W may be juxtaposed in several stages in the moisture jet section 5 of valve 20. The nozzle 4 disposed in the position nearest to the pressure reducing section 2 is a flat nozzle 4a. Other nozzles 4 disposed further away from the pressure reducing section 2 may have jet patterns of either planar or conical shape.

In the present invention, a superheated steam S can be cooled more efficiently than the prior art, by adopting a flat nozzle 4a having the subcooled water mist W jet pattern r planar.

To be more specific, the nozzle 4 can be placed as nearest as possible to the pressure reducing section 2 by adopting a flat nozzle 4a with a planar jet pattern, and setting the plane direction of the subcooled water mist W to be injected in a direction perpendicular to the steam S1 flow direction, and thus preventing the moisture W from making contact with the pressure reducing section 2; whereby the subcooled water mist W can be injected against a high velocity steam S1 (power most appropriate for dispersing (subdividing) the subcooled water mist W) immediately after passing through the pressure reducing section 2.

Therefore, the present invention can depressurize and condition superheated steam, and moreover, the size of the valve can be reduced and still avoid cracking and breaking of pressure reducing section 2.

### DETAILED DESCRIPTION

Reference is now made to the Drawings wherein like reference characters denote like or similar parts throughout the Figures.

In the preferred embodiment, a cylindrical body 6 comprising a first port 1 for introducing a superheated steam S and a second port 3 for discharging depressurized and desuperheated steam is provided with a pressure reducing section 2 for cooling and depressurizing the superheated steam S, and a moisture jet section 5 for cooling by injecting a mist of subcooled water W into the steam S1 having passed through pressure reducing section 2.

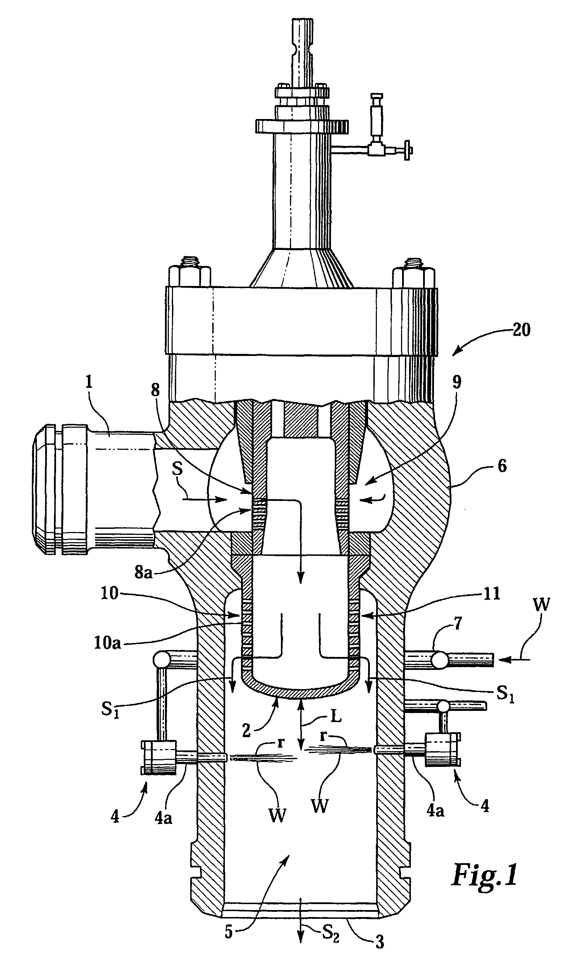

Pressure reducing section 2 comprises, as shown in Fig. 1, a vertically movable plug 9 having a small hole section 8 provided with small holes 8a scattered around a cylindrical body with an open lower end, and a diffuser 11 fixed to the body 6 at the lower position of this plug 9 in communication with said plug 9, and having a small hole section 10 provided with small holes 10a scattered around a cylindrical body with a bottom and an open upper end, and is configured to depressurize the superheated steam S by passing through the small hole 8a of the plug 9 and the small holes 10a of the diffuser 11 and transform it into an annular flowing steam S1.

The moisture jet section 5 is provided with one or more (preferably at least 3) nozzles 4 disposed annularly and on a same plane for supplying atomized moisture W (subcooled water) to an inner wall face of the body 6. Subcooled water mist W is supplied to nozzles 4 by water supply pipe 7. Additional groups of nozzles 4 may be juxtaposed in the longitudinal direction of the body 6 in several stages in the longitudinal direction.

Moreover, in this embodiment, a flat nozzle 4a (jet angle 160 degrees or less, nozzle gap 10 mm or less) is adopted having a flat (sector) jet pattern r. The planar orientation of the jet pattern subcooled water mist W from this flat nozzle 4a is oriented perpendicular to the flow direction of the annular flow vapor S1, and at a predetermined distance L, between the jet pattern r of the subcooled water mist W injected from this flat nozzle 4a and the pressure reducing section 2 preventing the subcooled water mist W from making contact with the pressure reducing section 2.

Also, among these nozzles 4, at least the nozzle 4 nearest the pressure reducing section 2 should be a flat nozzle 4a, and the other nozzles 4 may either be nozzles 4 having a conical jet pattern r of the subcooled water mist W similarly to the conical jets known in the prior art or flat nozzles 4a.

It will be understood by those skilled in the art that the number of nozzles 4 can be varied to adjust the temperature of the steam S2 exiting the conditioning valve of the present invention.

In operation, the conditioning valve 20 desuperheats and depressurizes the superheated steam S introduced from the first port 1 by passing through the pressure reducing section 2, transforms it into a high velocity annular flowing depressurized steam S1 flowing into the moisture jet section 5 from an annular section defined between the body 6 and the pressure reducing section 2. The mist of subcooled water W is injected from the nozzle 4 and impinges against the annular flowing steam S1. The subcooled water mist W is dispersed (subdivided) to cool the depressurized steam S1 which exits valve 20 as depressurized and desuperheated steam S2.

In this embodiment, having flat nozzle 4a with a flat jet pattern r, the nozzle 4 can be disposed as near as possible to the pressure reducing section 2 (diffuser 11). Nozzle 4 can be positioned closer to pressure reducing section 2 than the nozzle 134 of the prior art that injects the chilled water mist W conically. The mist W impinges against the powerful (power most appropriate for subdividing the moisture W) annular flowing steam S1 immediately after exiting the annular spaces between the body 6 and the pressure reducing section 2.

In this respect, the Applicant has performed various experiments, confirming the following points:

A nozzle 134 having a conical subcooled water mist W jet pattern r (as in the prior art), cannot be disposed near the pressure reducing section 2 because it is difficult to have sufficient velocity in the annular flowing steam S1 to disperse (subdivide) the subcooled water mist W. Additionally, the collision angle of the annular flowing steam S1 varies due to an unstable jet direction. The relative velocity of the annular flowing steam S1 fluctuates, and the mist diameter after the subdivision by the collision with the annular flowing steam S1 becomes uneven, reducing the cooling effect (it is important to make the mist diameter after the subdivision by the collision even to achieve effective cooling).

On the contrary, if a flat nozzle 4a is adopted as in the present invention, the nozzle 4 can be disposed as near as possible to the pressure reducing section 2 as mentioned before. It is possible to make the annular flowing steam S1 impinge powerfully against the subcooled water mist W and to subdivide the mist W sufficiently, and moreover, as the annular flowing steam S1 is injected in a fixed direction perpendicular to the flow direction of the annular flowing steam S1, the mist diameter after the subdivision becomes even, increasing the cooling effect dramatically over the prior art.

Moreover, in this embodiment, as the nozzle 4 can be disposed as near as possible to the pressure reducing section 2, it is possible to reduce the longitudinal length of the lower portion (moisture jet section) 5 in which the mist W is injected, and eventually to reduce the size of the whole valve.

A preferred embodiment of the invention has been illustrated in the accompanying Drawings and described in the foregoing Detailed Description. It will be understood that the invention is not limited to the embodiment disclosed, but is capable of numerous modifications without departing from the scope of the invention as claimed.

## Claims

1. A steam pressure reducing and conditioning valve (20) for passing a superheated steam (s) inflowing from a first port (1) through a pressure reducing section (2), and supplying a mist of subcooled water (w) and discharging cooled and decompressed vapor (s2) from a second port (3), wherein a nozzle (4) for supplying said mist (w) is provided in the proximity to said pressure reducing section, **characterized by** a flat nozzle (4a) injecting said mist (w) in a planar pattern (r) whereby the planar orientation is perpendicular to the direction of steam flows, and it is disposed a predetermined distance (1) from said pressure reducing section (2).

2. The valve of claim 1, wherein the pressure reducing section (2) has a bottom and a cylindrical form, and the mist pattern (r) is substantially parallel to the bottom of the pressure reducing section.

3. The vapor change valve of claim 1, wherein nozzles (4a) for supplying said mist are juxtaposed longitudinally in several stages in the flow direction of steam oriented towards the second port (3) and at least the nozzle (4a) disposed at the position nearest to the pressure reducing section is a flat nozzle.

4. The valve of claim 1 wherein
a moisture jet section (5) is disposed downstream of the pressure reducing section (2), said moisture jet section comprises:
one or more flat nozzles (4a) for injecting one or more respective planar patterns (r) of water (w) into a flow of the steam (s2) exiting the pressure reducing section (2).

5. The valve of claim 4, wherein at least one of the one or more flat nozzles (4a) are positioned upstream of an upstream-most position at which a conical pattern forming nozzle can be positioned without injecting a conical pattern of water that impacts the pressure reducing section.

6. The valve of claim 4, wherein the one or more flat nozzles (4a) are oriented to inject the planar patterns (r) of water (w) perpendicular to the flow of steam.

7. The valve of claim 6, wherein the one or more flat nozzles (4a) are positioned annular about the moisture jet section (5).

8. The valve of claim 4, comprising a plurality of nozzles spaced longitudinally in stages downstream from the one or more flat nozzles.

9. The valve of claim 8, wherein the plurality of nozzles (4a) comprises groups of nozzles in the stages.

10. The valve of claim 4 wherein:
a pressure reducing section (2) comprises:
a plug (9) having a small-hole section (8) further comprising:
a cylindrical body having a bottom, a plurality of small holes (8a) scattered about the cylindrical body proximate the bottom, wherein steam exits the pressure section in rapid annular flow.

11. The valve of Claim 10, wherein the flat nozzles (4a) are oriented to inject the planar patterns (r) of water perpendicular to the flow of steam.

12. The valve of Claim 11, wherein the flat nozzles (4a) are annularly spaced about the moisture jet section (5).

13. A method of desuperheating and depressurizing superheated steam, the method comprising:
depressurizing superheated steam (5);
transforming the steam into rapid annular flow; and
injecting one or more planar patterns (r) of water into the rapid annular flow.

14. The method of Claim 13, comprising:
positioning nozzle jets (4a) for forming the one or more planar patterns (r) of water proximate to structure for depressurizing the steam (s) while avoiding contacting the structure with the planar patterns (p) of water.

15. The method of Claim 14, wherein positioning the nozzles (4) comprises positioning at least one nozzle (4a) for forming a planar pattern of water (r) at an upstream position to inject water (w) into the flow while the flow is uniform and rapid and orienting the at least one nozzle to avoid contacting the structure with water (w) from the nozzle.

16. The method of Claim 13, comprising injecting the one or more planar patterns of water (r) from positions spaced annularly about the annular flow of steam (s).

17. The method of Claim 16, comprising injecting the one or more planar patterns (r) of water (w) into the annular flow prior to the flow substantially decreasing in speed or becoming substantially non-uniform.

## Patentansprüche

1. Dampfdruckreduzierungs- und Konditionierungsventil (20), um einen überhitzten Dampf (s), der von einem ersten Anschluss (1) einströmt, durch einen Druckreduzierungsabschnitt (2) strömen zu lassen, und um einen Nebel aus unterkühltem Wasser (w) zuzuführen, und um abgekühlten und dekomprimierten Dampf (s2) aus einem zweiten Anschluss (3) auszustoßen, wobei eine Düse (4) zum Zuführen des Nebels (w) in der Nähe von dem Druckreduzierungsabschnitt vorgesehen ist; **gekennzeichnet durch** eine flache Düse (4a), um den Nebel (w) in einem planaren Muster (r) einzuspritzen, wobei die planare Orientierung senkrecht zur Richtung der Dampfströmung verläuft, und sie mit einem vorbestimmten Abstand (1) von dem Druckreduzierungsabschnitt (2) angeordnet ist.

2. Ventil nach Anspruch 1, bei dem der Druckreduzierungsabschnitt (2) einen Boden und eine zylindrische Form hat, und das Nebelmuster (r) im wesentlichen parallel zu dem Boden des Druckreduzierungsabschnitts verläuft.

3. Dampfumwandlungsventil nach Anspruch 1, bei dem Düsen (4a) zum Zuführen des Nebels in Längsrichtung in mehreren Stufen in der Strömungsrichtung des Dampfes in Juxtaposition in Ausrichtung auf den zweiten Anschluss (3) angeordnet sind, und zumindest die Düse (4a), die zu dem Druckreduzierungsabschnitt den geringsten Abstand hat, eine flache Düse ist.

4. Ventil nach Anspruch 1, bei dem
ein Feuchtigkeitsstrahlabschnitt (5) stromabwärts des Druckreduzierungsabschnitts (2) angeordnet ist und der Feuchtigkeitsstrahlabschnitt aufweist:
eine oder mehrere flache Düsen (4a) zum Einspritzen von einem oder mehreren zugehörigen planaren Mustern (r) aus Wasser (w) in eine Strömung des Dampfes (s2), der aus dem Druckreduzierungsabschnitt (2) austritt.

5. Ventil nach Anspruch 4, bei dem zumindest eine von der einen oder den mehreren flachen Düsen (4a) stromaufwärts von einer am weitesten stromaufwärts gelegenen Position angeordnet ist, an der eine ein konisches Muster bildende Düse angeordnet sein kann, ohne dass ein konisches Muster aus Wasser einzuspritzen, das auf den Druckreduzierungsabschnitt auftrifft.

6. Ventil nach Anspruch 4, bei dem die eine oder mehreren flachen Düsen (4a) ausgerichtet sind, um die planaren Muster (r) aus Wasser (w) senkrecht zu der Dampfströmung einzuspritzen.

7. Ventil nach Anspruch 6, bei dem die eine oder mehreren flachen Düsen (4a) ringförmig um den Feuchtigkeitsstrahlabschnitt (5) angeordnet sind.

8. Ventil nach Anspruch 4, mit einer Vielzahl von Düsen, die in Längsrichtung stromabwärts von der einen oder den mehreren flachen Düsen in Stufen beabstandet sind.

9. Ventil nach Anspruch 8, bei dem die Vielzahl von Düsen (4a) Gruppen von Düsen in den Stufen beinhalten.

10. Ventil nach Anspruch 4, bei dem:
ein Druckreduzierungsabschnitt (2) aufweist:
einen Stopfen (9), der einen Abschnitt (8) mit kleinen Löchern beinhaltet, und außerdem mit:
einem zylindrischen Körper mit einem Boden und einer Vielzahl von kleinen Löchern (8a), die in der Nähe des Bodens um den zylindrischen Körper herum verstreut angeordnet sind, wobei der Dampf den Druckabschnitt in einer schnellen ringförmigen Strömung verlässt.

11. Ventil nach Anspruch 10, bei dem die flachen Düsen (4a) ausgerichtet sind, um die planaren Muster (r) aus Wasser senkrecht zu der Dampfströmung einzuspritzen.

12. Ventil nach Anspruch 11, bei dem die flachen Düsen (4a) ringförmig um den Feuchtigkeitsstrahlabschnitt (5) herum beabstandet sind.

13. Verfahren zum Entüberhitzen und Dekomprimieren von überhitztem Dampf, wobei das Verfahren umfasst:
Dekomprimieren von überhitztem Dampf (5);
Umwandeln des Dampfes in eine schnelle ringförmige Strömung; und
Einspritzen von einem oder von mehreren planaren Mustern (r) aus Wasser in die schnelle ringförmige Strömung.

14. Verfahren nach Anspruch 13, mit:
Positionieren von Einspritzdüsen (4a); um das eine oder die mehreren planaren Muster (r) aus Wasser in der Nähe der Anordnung zum Dekomprimieren des Dampfes (s) zu bilden, wobei ein Kontakt der Struktur mit den planaren Mustern (r) aus Wasser vermieden wird.

15. Verfahren nach Anspruch 14, bei dem das Positionieren der Düsen (4) das Positionieren von zumindest einer Düse (4a) zum Bilden eines planaren Musters (r) aus Wasser an einer stromaufwärts gelegenen Position beinhaltet, um Wasser (w) in die Strömung einzuspritzen, wobei die Strömung gleichförmig und schnell ist, sowie Ausrichten der zumindest einen Düse, um zu verhindern, dass die Struktur mit Wasser (w) von der Düse in Kontakt kommt.

16. Verfahren nach Anspruch 13, mit dem Einspritzen von dem einen oder den mehreren planaren Mustern (r) aus Wasser aus Positionen, die um die ringförmige Dampfströmung (s) ringförmig beabstandet sind.

17. Verfahren nach Anspruch 16, mit dem Einspritzen von dem einen oder den mehreren planaren Mustern (r) aus Wasser (w) in die ringförmige Strömung, bevor die Geschwindigkeit der Strömung wesentlich abnimmt oder wesentlich ungleichförmig wird.

## Revendications

1. Soupape (20) de réduction et de conditionnement de pression de vapeur pour le transfert d'une vapeur surchauffée (s) arrivant par un premier orifice (1) à travers une section de réduction de pression (2), et envoyer un brouillard d'eau refroidi (w) et évacuer de la vapeur refroidie et détendue (s2) par un second orifice (3), dans laquelle une buse (4) servant à délivrer ledit brouillard (w) est prévue à proximité de ladite section de réduction de pression, **caractérisée par** une buse plate (4a) injectant ledit brouillard (w) selon une configuration plane (r), la configuration plane étant perpendiculaire à la direction d'écoulement de vapeur et étant disposée à une distance prédéterminée (1) de ladite section de réduction de pression (2).

2. Soupape selon la revendication 1, dans laquelle la section de réduction de pression (2) possède un fond et une forme cylindrique, et la configuration de brouillard (r) est sensiblement parallèle au fond de la section de réduction de pression.

3. Soupape de changement de vapeur selon la revendication 1, dans laquelle des buses (4a) servant à délivrer ledit brouillard sont juxtaposées longitudinalement sur plusieurs étages dans la direction d'écoulement de la vapeur orienté vers le second orifice (3), et au moins la buse (4a) disposée dans la position la plus proche de la section de réduction de pression est une buse plate.

4. Soupape selon la revendication 1, dans laquelle
une section (5) de jet d'humidité est disposée en aval de la section de réduction de pression (2), et ladite section de jet d'humidité comprend :
une ou plusieurs buses plates (4a) pour injecter une ou plusieurs configurations planes respectives (r) d'eau (w) dans un écoulement de la vapeur (s2) sortant de la section de réduction de pression (2).

5. Soupape selon la revendication 4, dans laquelle au moins la buse plate ou l'une de la pluralité de buses plates (4a) sont disposées en amont d'une position la plus en amont, dans laquelle une buse de formation de configuration conique peut être positionnée sans injection d'une configuration conique d'eau frappent la section de réduction de pression.

6. Soupape selon la revendication 4, dans laquelle la buse plate ou la pluralité de buses plates (4a) sont orientées de manière à injecter les configurations planes (r) d'eau (w) perpendiculairement à l'écoulement de vapeur.

7. Soupape selon la revendication 6, dans laquelle la buse plate ou la pluralité de buses plates (4a) sont positionnées de façon annulaire autour de la section (5) de jet d'humidité.

8. Soupape selon la revendication 4, comprenant une pluralité de buses espacées longitudinalement selon des étages vers l'aval à partir de la buse plate ou de la pluralité de buses plates.

9. Soupape selon la revendication 8, dans laquelle la pluralité de buses plates (4a) comprend des groupes de buses dans les étages.

10. Soupape selon la revendication 4, dans laquelle :
une section de réduction de pression (2) comprend :
un bouchon (9) possédant une section à petits trous (8) comprenant en outre :
un corps cylindrique possédant un fond, une pluralité de petits trous (8a) dispersés sur le corps cylindrique à proximité du fond, la vapeur sortant de la section de pression selon un écoulement annulaire rapide.

11. Soupape selon la revendication 10, dans laquelle les buses plates (4a) sont orientées de manière à injecter les configurations planes (r) d'eau perpendiculairement à l'écoulement de vapeur.

12. Soupape selon la revendication 11, dans laquelle les buses plates (4a) sont espacées annulairement autour de la section (5) produisant un jet d'humidité.

13. Procédé pour désurchauffer et dépressuriser la vapeur surchauffée, le procédé consistant à :
dépressuriser la vapeur surchauffée (5);
transformer la vapeur en un écoulement annulaire rapide; et
injecter une ou plusieurs configurations planes (r) d'eau dans l'écoulement annulaire rapide.

14. Procédé selon la revendication 13, comprenant :
- le positionnement de jets de buses (4a) pour former une ou plusieurs configurations planes (r) d'eau à proximité de la structure pour dépressuriser la vapeur (s) tout en évitant le contact de la structure avec les configurations planes (p) d'eau.

15. Procédé selon la revendication 14, selon lequel le positionnement des buses (4) comprend le positionnement d'au moins une buse (4a) pour former une configuration plane d'eau (r) dans une position amont pour injecter de l'eau (w) dans l'écoulement alors que l'écoulement est uniforme et rapide, et orienter la au moins une buse pour éviter un contact de la structure avec l'eau (w) provenant de la buse.

16. Procédé selon la revendication 13, comprenant l'injection d'une ou de plusieurs configurations planes d'eau (r) à partir de positions espacées annulairement autour de l'écoulement annulaire de vapeur (s).

17. Procédé selon la revendication 16, comprenant l'injection d'une ou de plusieurs configurations planes (r) d'eau (w) dans l'écoulement annulaire avant que la vitesse de l'écoulement diminue sensiblement ou devienne sensiblement non uniforme.
